# EUROPÄISCHE PATENTANMELDUNG

(11) **EP 2 283 955 A1**
(43) Veröffentlichungstag der Anmeldung: **16.02.2011**
(21) Anmeldenummer: 09010423.3
(22) Anmeldetag: 13.08.2009
(51) Int. Cl.: B23B 31/28, B23B 31/16

(54) **Spanneinrichtung für Werkzeugmaschinen**

(71) Anmelder: Hiestand, Karl, 88630 Pfullendorf (DE)
(72) Erfinder: Hiestand, Karl, 88630 Pfullendorf (DE)
(74) Vertreter: Engelhardt, Guido

(57) **Zusammenfassung**

Bei einer Spanneinrichtung (1) für Werkzeugmaschinen (2), die mit einem Kraftspannfutter (3) versehen und dessen Spannbacken (4) mittels einer Zugstange (6) betätigbar sind, wobei die Spanneinrichtung (1) einen elektrischen Servomotor (11) sowie einen Bewegungswandler (21) aufweist, ist dem Servomotor (11) ein Untersetzungsgetriebe (31) zugeordnet, das mit der Maschinenspindel (5) der Werkzeugmaschine (2) und dem Stator (12) des Servormotors (11) trieblich verbunden ist. Der Rotor (13) des Servomotors (11) ist dagegen über dem Bewegungswandler (21) mit der Zugstange (6) der Spanneinrichtung (1) trieblich gekoppelt.

Auf diese Weise wird erreicht, dass der Stator (12) des Servomotors (11) stets mit erheblich reduzierten Drehzahlen angetrieben wird und dass bei einem Spannvorgang der Rotor (13) nur für eine kurze Zeitspanne gegenüber dem Stator (12) verdreht wird. Hohe Belastungen der Bauteile sowie störende Betriebsgeräusche treten somit nicht auf. Ein störungsfreier Betrieb der Spanneinrichtung (1) bei wirtschaftlicher Herstellung ist demnach gewährleistet.

## Beschreibung

Die Erfindung bezieht sich auf eine Spanneinrichtung für Werkzeugmaschinen, die mit einem kraftbetätigten Spannfutter zur Halterung eines Werkstückes versehen und dessen Spannbacken mittels der Spanneinrichtung über eine axial verstellbare Zugstange betätigbar sind, wobei die Spanneinrichtung einen umschaltbaren elektrischen Servomotor sowie einen Bewegungswandler aufweist, mittels dem die Verstellbewegungen der Rotorwelle des Servomotors in die zur Verstellung der Spannbacken erforderlichen axialen Verstellbewegungen der Zugstange umsetzbar sind.

Eine Spanneinrichtung dieser Art ist durch die EP 0234230 B1 bekannt. Bei dieser Spanneinrichtung, bei der die Rotationsbewegungen des Rotors mittels eines Schraubtriebes als Bewegungswandler in axiale Verstellbewegungen umgewandelt werden, wird der Stator des Servomotors während eines Bearbeitungsvorganges von der Maschinenspindel der Werkzeugmaschine mit deren Drehzahl ständig angetrieben, und mit diesem läuft synchron der Rotor um. Die Wicklung des Servomotors wird dadurch in einem starken Maße belastet. Vor allem aber ist hierbei von Nachteil, dass bei einem Spannvorgang die erheblichen Massen der an der Kraftübertragung beteiligten Bauteile jeweils beschleunigt bzw. abgebremst werden müssen, somit hohe Zentrifugalkräfte auftreten und insbesondere die zur Kraftübertragung vorgesehen Riementriebe sehr stark belastet sind. Eine lange Lebensdauer dieser bekannten Spanneinrichtung ist demnach nicht gewährleistet, auch verursachen die ständig umlaufenden Bauteile, insbesondere die Riementriebe, sehr hohe Betriebsgeräusche, so dass eine zufriedenstellende Betriebsweise nicht gegeben ist.

Aufgabe der Erfindung ist es daher, eine Spanneinrichtung für Werkzeugmaschinen der vorgenannten Gattung zu schaffen, bei dem der Stator zwar mit der Maschinenspindel gekoppelt, aber gegenüber dieser nur mit einer erheblich reduzierten Drehzahl antreibbar ist. Bei einem Spannvorgang soll der Rotor jeweils nur kurzzeitig gegenüber dem Stator verdreht werden, so dass die Wicklung des Servomotors, bedingt durch die geringen Drehzahlen des Stators, nahezu nicht belastet werden und dass keine nennenswerten Betriebsgeräusche auftreten. Eine lange Lebensdauer der Spanneinrichtung soll somit gegeben sein. Auch soll eine stets hohe Betriebssicherheit gewährleistet werden.

Gemäß der Erfindung wird dies bei einer Spanneinrichtung für Werkzeugmaschinen der vorgenannten Art dadurch erreicht, dass dem Servomotor ein Untersetzungsgetriebe zugeordnet ist, das unmittelbar oder über Zwischenglieder mit der Maschinenspindel der Werkzeugmaschine und dem Stator des Servomotors trieblich verbunden ist, und dass der Rotor des Servomotors über den Bewegungswandler als Zwischenglied mit der Zugstange der Spanneinrichtung trieblich gekoppelt ist.

Zweckmäßig ist es hierbei, das Untersetzungsgetriebe dem Servomotor unmittelbar vorzuschalten, das Untersetzungsgetriebe jeweils als Spannungswellengetriebe, als Planetenradgetriebe, als Gleitkeilgetriebe und/oder als Riementrieb auszubilden. Bei Verwendung eines Spannungswellengetriebes , eines Planetenradgetriebes od. eines Gleitkeilgetriebes als Untersetzungsgetriebe sollte dieses ein Untersetzungsverhältnis von etwa 1:50 bis 1:200 aufweisen.

Bei einer vorteilhaften Ausgestaltung sollte das Untersetzungsgetriebe unmittelbar an dem Bewegungswandler abgestützt und mit der Maschinenspindel der Werkzeugmaschinen trieblich verbunden, der Stator des Servormotors sollte trieblich mit dem Abtriebsglied des Untersetzungsgetriebes gekoppelt und der Rotor des Servomotors sollte koaxial zur Zugstange angeordnet sein und mit dem Bewegungswandler in Triebverbindung stehen.

Nach einer andersartigen Ausführungsvarianten sollte das Untersetzungsgetriebe und der Rotor des Servomotors gemeinsam auf einer die Rotorwelle bildenden Trägerwelle abgestützt sein, die koaxial zur Zugstange an dem Bewegungswandler der Spanneinrichtung angeordnet und mit diesem trieblich verbunden ist, wobei die Trägerwelle in einem ortsfest angeordneten Gehäuse drehbar gelagert und als Hohlwelle ausgebildet sein sollte.

Nach einer weiteren Ausgestaltung kann das Untersetzungsgetriebe und der Servomotor koaxial zueinander und gegenüber der Längsachse der Zugstange seitlich versetzt in einem gesonderten Gehäuse angeordnet sein, und das Eingangsglied und das Ausgangsglied des Untersetzungsgetriebes sollten jeweils über einen Riementrieb mit dem Bewegungswandler trieblich verbunden sein.

Wird eine Spanneinrichtung für Werkzeugmaschinen gemäß der Erfindung ausgebildet, so ist gewährleistet, dass der Stator des Servormotors, da dieser über ein Untersetzungsgetriebe, das ein großes Untersetzungsverhältnis aufweist, mit der Maschinenspindel trieblich verbunden ist, stets nur mit einer geringen Drehzahl angetrieben ist, und dass bei einem Spannvorgang, um die Spannbacken des Kraftspannfutters über die Zugstange zu betätigen, der Rotor nur für eine kurze Zeitspanne gegenüber dem Stator verdreht wird. Störende Betriebsgeräusche sind demnach nicht in Kauf zu nehmen, auch treten keine hohen Zentrifugalkräfte auf, so dass stets eine hohe Betriebssicherheit und eine lange Lebensdauer, da die an der Kraftübertragung beteiligten Bauteile nicht hoch beansprucht werden, gegeben ist.

Des Weiteren ist von Vorteil, dass die Spanneinrichtung klein baut, der Bauaufwand gering ist und somit eine wirtschaftliche Herstellung ermöglicht wird. Als Untersetzungsgetriebe und/oder als Servomotor können nämlich handelsübliche Bauteile eingesetzt werden, die in unterschiedlicher Weise mit dem Bewegungswandler unmittelbar an diesem anflanscht oder seitlich zu diesem angeordnet werden können. Auch dadurch wird die Betriebssicherheit gesteigert, und es ist die Gewähr gegeben, dass eine vielseitige Verwendungsweise und eine hohe Funktionsfähigkeit über einen langen Zeitraum sichergestellt ist.

In der Zeichnung sind einige Ausführungsvarianten der gemäß der Erfindung ausgebildeten Spanneinrichtung für Werkzeugmaschinen dargestellt, die nachfolgend im Einzelnen erläutert sind. Hierbei zeigt:
jeweils in einem Axialschnitt,
- Figur 1: die an einer Werkzeugmaschine koaxial zu dieser angebaute Spanneinrichtung mit einem dem Servormotor vorgeschalteten als Spannungswellengetriebe ausgebildetes Untersetzungsgetriebe,
- Figur 2: die Spanneinrichtung nach Figur 1 mit einem als Planetenradgetriebe als Untersetzungsgetriebe versehenen Servomotor, als Hohlspann- aggregat,
- Figur 3: die Spanneinrichtung nach Figur 1, achsversetzt zu der Maschinen- spindel, und
- Figur 4: die Spanneinrichtung nach Figur 2, ebenfalls achsversetzt zu der Maschinenspindel.

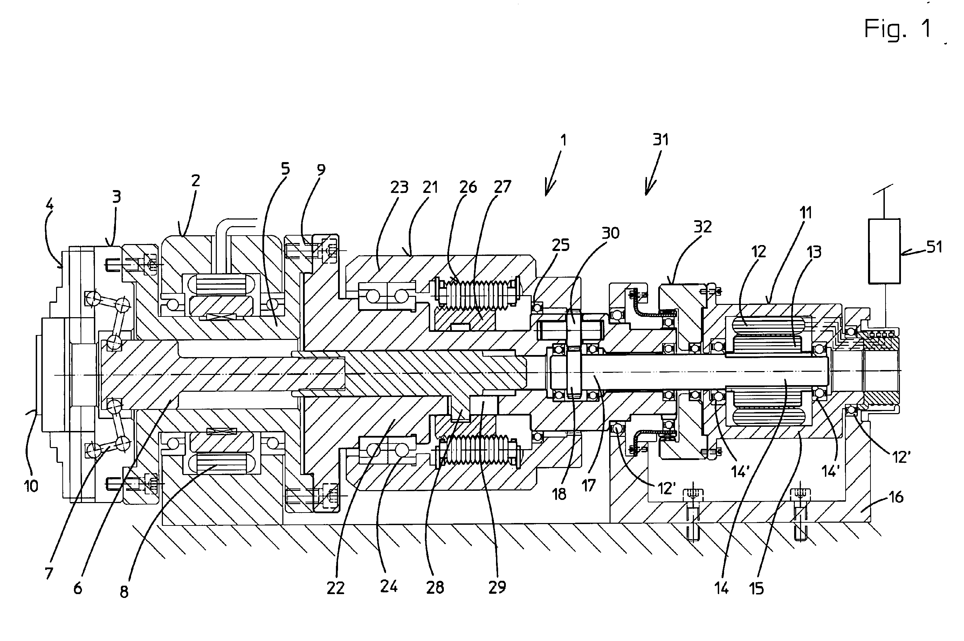

Die in den Figuren 1 bis 4 dargestellte und jeweils mit 1 bezeichneten Spanneinrichtungen dienen zur Betätigung eines auf einer Werkzeugmaschine 2 angeordneten Kraftspannfutters 3, mittels dessen radial verstellbarer Spannbacken 4 ein zu bearbeitendes Werkstück 10 in dem Kraftspannfutter 3 einspannbar ist. Die Spannbacken 4 des Kraftspannfutters 2 sind hierbei über Umlenkhebel 7 durch eine axial bewegbare Zugstange 6 betätigbar, die mit einem umschaltbaren elektrischen Servomotor 11 über einen Bewegungswandler 21 in Triebverbindung steht. Mittels des Bewegungswandlers 21 werden rotorische Verstellbewegungen des Servomotors 11 in axiale Verstellungsbewegungen der Zugstange 6 umgesetzt.

Die Servomotoren 11 bestehen jeweils aus einem Stator 12, der in einem Gehäuse 15 angeordnet ist, sowie einem Rotor 13, dessen Rotorwelle 14 mit dem Bewegungswandler 21 trieblich verbunden ist. Der Stator 12 ist über eine Hohlwelle 22 mit der durch einen Elektromotor 8 antreibbaren Maschinenspindel 5 der Werkzeugmaschine 2 gekoppelt, in dem die Hohlwelle 22 an einem mit der Maschinenspindel 5 angebrachten Flansch 9 drehfest befestigt ist.

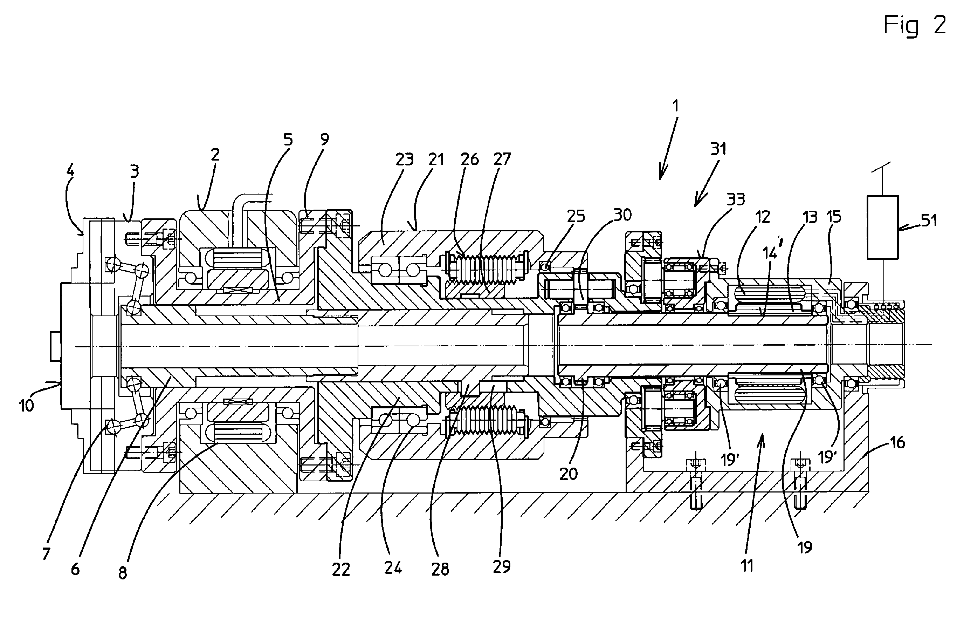

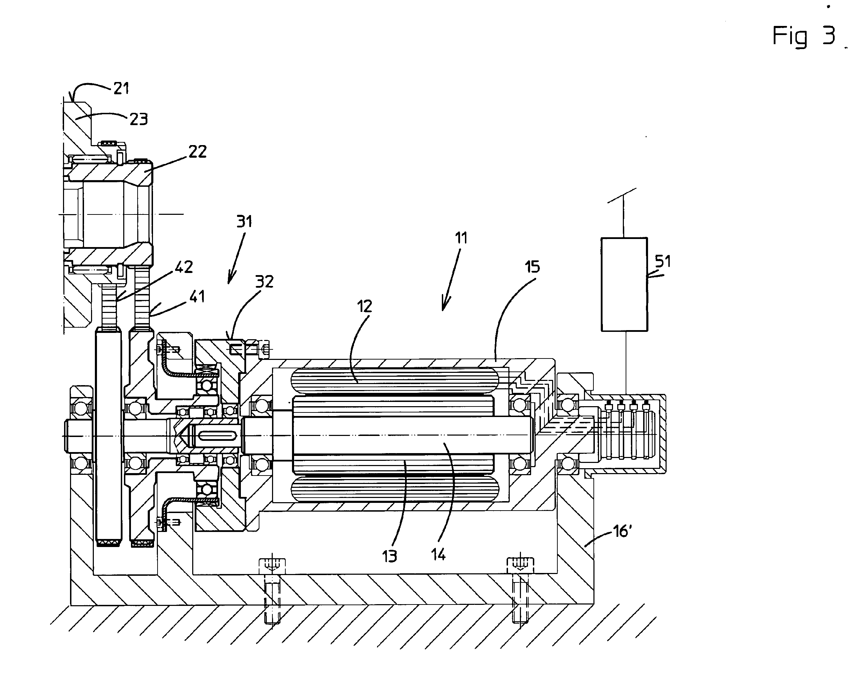

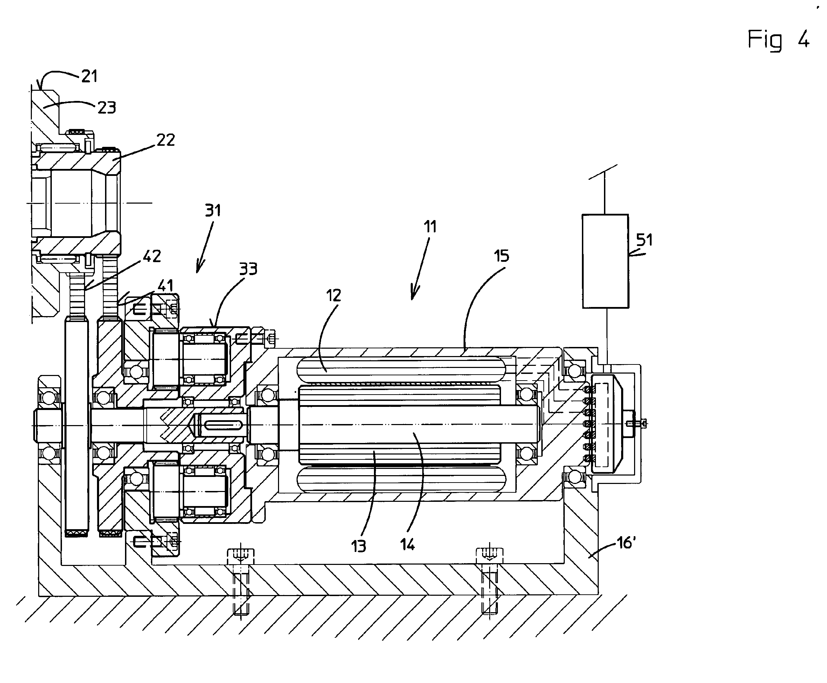

Um den Stator 12 des Servomotors 11 nicht mit der hohen Drehzahl der Maschinenspindel 5 anzutreiben, ist dem Servomotor 11 jeweils ein unterschiedlich ausgebildetes Untersetzungsgetriebe 31 vorgeschaltet, das gemäß den Figuren 1 und 3 als Spannungswellengetriebe 32 und gemäß den Figuren 2 und 4 als Planetenradgetriebes 33 ausgebildet sein kann. Das Untersetzungsgetriebe 31 weist hierbei ein Untersetzungsverhältnis von etwa 1:50 bis 1:200 auf, so dass der Stator 12 bei Betrieb der Werkzeugmaschine 2 nur mit einer geringen Drehzahl angetrieben wird.

Bei der Ausgestaltung nach Figur 1 ist die Rotorwelle 14 des Servomotors 11 mittels Wälzlager 14' drehbar in dem den Stator 12 tragenden Gehäuse 15 gelagert, das wiederum über Wälzlager 12' in einem ortsfesten Träger 16 drehbar gelagert ist. Über eine mit der Rotorwelle 14 drehfest verbundene Zwischenwelle 17 und einem durch Zahnräder 18 und 30 gebildeten Stufengetriebe ist die Rotorwelle 14 mit dem Bewegungswandler 21 trieblich gekoppelt.

Nach Figur 2 ist die den Rotor 13 tragende Welle 14' als Hohlwelle 19 ausgebildet, die mittels Wälzlager 19' in dem Gehäuse 15 des Stators 12 drehbar gelagert ist. Auf diese Weise ist ein freier Spindeldurchgang gegeben. Über ein Zahnrad 20 steht die Rotorwelle 14' mit dem in den Bewegungswandler 21 eingesetzten Zahnrad 30 wiederum in Triebverbindung.

Der Bewegungswandler 21 weist eine mittels Wälzlager 24 und 25 drehbar auf der Hohlwelle 22 gelagerte Glocke 23 sowie ein in diese eingesetztes, beispielsweise als Gewinderollspindel ausgebildetes Getriebeglied 26 auf, das über einen Mitnehmer 27 und einen an der Zugstange 6 angeformten Ansatz 28, der eine in die Hohlwelle 22 eingearbeitete Ausnehmung 29 durchgreift, mit der Zugstange 6 trieblich verbunden ist. Rotorische Verstellbewegungen der Rotorwelle 14 bzw. 14' werden somit in dem Bewegungswandler 21 in die zur Betätigung der Spannbacken 4 erforderlichen axialen Verstellbewegungen der Zugstange 6 umgewandelt.

Um das Werkstück 10 bei geöffnetem Spannfutter 3 in dieses einzuspannen, ist bei stillstehender Maschinenspindel 6 dem Servomotor 11 über ein Steuergerät 51 elektrische Energie zuzuführen. In dem Stator 12 wird dadurch ein in entsprechender Weise je nach Spannrichtung umlaufendes Drehfeld aufgebaut, durch das der Rotor 13 in eine Drehbewegung versetzt wird, so dass dessen Rotorwelle 14 bzw. 14' umläuft. Dem Stator 12 ist in diesem Betriebszustand die elektrische Energie mit einer Stromstärke zuzuführen, um die Reibkräfte der an der Kraftübertragung beteiligten Bauteile zu überwinden. Mit Hilfe des Bewegungswandlers 21 wird die rotorische Verstellbewegung der Rotorwelle 14 bzw. 14' in eine axiale Zustellbewegung der Zugstange 6 umgewandelt. Die Spannbacken 4 des Kraftspannfutters 3 werden somit radial nach innen oder außen bis zur Anlage an dem Werkstück 10 verstellt.

Wird nunmehr mit Hilfe des Steuergerätes 51 die Stromstärke erhöht, wird die auf das Werkstück 10 ausgeübte Spannkraft ebenfalls gesteigert und an den jeweiligen Bearbeitungsvorgang angepasst, das Werkstück 10 ist sicher eingespannt.

Bei der Bearbeitung des Werkstückes 10 wird der Stator 12 mit einer geringen, durch das Untersetzungsgetriebe 31 erheblichen reduzierten Drehzahl angetrieben. Das magnetische Drehfeld läuft hierbei stets mit der vorgegebenen maximalen Drehzahl um. Das Drehmoment, das von dem Rotor 13 abgegeben wird, wird dagegen mit Hilfe der Stromstärke geregelt, so dass die Spannkraft problemlos mit dem jeweiligen Bearbeitungsvorgang leicht abgestimmt werden kann. Die Spanneinrichtung 1 ist somit bei geringen Betriebsgeräuschen vielseitig über einen langen Zeitraum störungsfrei einsetzbar.

Bei den in den Figuren 3 und 4 dargestellten Ausführungsvarianten sind der Servomotor 11 sowie die Untersetzungsgetriebe 31 bzw. 32, 33 jeweils seitlich versetzt gegenüber der Längsachse der Maschinenspindel 5 in einem gesonderten Gehäuse 16' angeordnet und über Riementriebe 41 und 42 mit der Hohlwelle 22 bzw. der Glocke 23 des Bewegungswandlers 21 trieblich verbunden. Der Riementrieb 41 kann hierbei ebenfalls als Untersetzungsgetriebe ausgelegt werden, um die Drehzahl, mit der das Gehäuse 15 des Stators 12 im Betrieb umläuft, weiter zu reduzieren.

## Patentansprüche

1. Spanneinrichtung (1) für Werkzeugmaschinen (2) , die mit einem kraftbetätigten Spannfutter (3) zur Halterung eines Werkstückes (10) versehen und dessen Spannbacken (4) mittels der Spanneinrichtung (1) über eine axial verstellbare Zugstange (6) betätigbar sind, wobei die Spanneinrichtung (1) einen umschaltbaren elektrischen Servomotor (11) sowie einen Bewegungswandler (21) aufweist, mittels dem die Verstellbewegungen der Rotorwelle (14) des Servomotors (11) in die zur Verstellung der Spannbacken (4) erforderlichen axialen Verstellbewegungen der Zugstange (6) umsetzbar sind,
**dadurch gekennzeichnet,**
**dass** dem Servomotor (11) ein Untersetzungsgetriebe (31) zugeordnet ist, das unmittelbar oder über Zwischenglieder mit der Maschinenspindel (5) der Werkzeugmaschine (1) und dem Stator (12) des Servomotors 11) trieblich verbunden ist, und dass der Rotor (13) des Servomotors (11) über den Bewegungswandler (21) als Zwischenglied mit der Zugstange (7) der Spanneinrichtung (1) trieblich gekoppelt ist.

2. Spanneinrichtung nach Anspruch 1,
**dadurch gekennzeichnet,**
**dass** das Untersetzungsgetriebe (31 bzw. 31, 32, 41) dem Servomotor (11) unmittelbar vorgeschaltet ist.

3. Spanneinrichtung nach Anspruch 1 oder 2,
**dadurch gekennzeichnet,**
**dass** das Untersetzungsgetriebe (31) jeweils als Spannungswellengetriebe (32), als Planetenradgetriebe (33), als Gleitkeilgetriebe und/oder als Riementrieb (41, 42) ausgebildet ist.

4. Spanneinrichtung nach den Ansprüchen 1 bis 3,
**dadurch gekennzeichnet,**
**dass** bei Verwendung eines Spannungswellengetriebes (32), eines Planetenradgetriebes (33) oder eines Gleitkeilgetriebes als Untersetzungsgetriebe (31) dieses ein Untersetzungsverhältnis von etwa 1:50 bis 1:200 aufweist.

5. Spanneinrichtung nach den Ansprüchen 1 bis 4,
**dadurch gekennzeichnet,**
**dass** das Untersetzungsgetriebe (32) unmittelbar an dem Bewegungswandler (21) abgestützt und mit der Maschinenspindel (5) der Werkzeugmaschinen (2) trieblich verbunden ist, dass der Stator (12) des Servomotors (11) trieblich mit dem Abtriebsglied des Untersetzungsgetriebe (31) verbunden ist, und dass der Rotor (13) des Servomotors (11) koaxial zur Zugstange (7) angeordnet und mit dem Bewegungswandler (21) in Triebverbindung steht.

6. Spanneinrichtung nach den Ansprüchen 1 bis 4,
**dadurch gekennzeichnet,**
**dass** das Untersetzungsgetriebe (33) und der Rotor (13) des Servomotors (11) gemeinsam auf einer die Rotorwelle (19) bildenden Trägerwelle abgestützt sind, die koaxial zur Zugstange (7) an dem Bewegungswandler (21) der Spanneinrichtung (1) angeordnet und mit diesem trieblich verbunden ist.

7. Spanneinrichtung nach Anspruch 6,
**dadurch gekennzeichnet,**
**dass** die Trägerwelle (19) in einem ortsfest angeordneten Gehäuse (16) drehbar gelagert ist.

8. Spanneinrichtung nach Anspruch 6 oder 7,
**dadurch gekennzeichnet,**
**dass** die Trägerwelle (19) als Hohlwelle ausgebildet ist.

9. Spanneinrichtung nach den Ansprüchen 1 bis 4,
**dadurch gekennzeichnet,**
**dass** das Untersetzungsgetriebe (31 bzw. 32, 33) und der Servomotor (11) koaxial zueinander und gegenüber der Längsachse der Zugstange (7) seitlich versetzt in einem gesonderten Gehäuse (16') angeordnet sind.

10. Spanneinrichtung nach Anspruch 9,
**dadurch gekennzeichnet,**
**dass** das Eingangsglied und das Ausgangsglied des Untersetzungsgetriebes (31 bzw. 32, 33) jeweils über einen Riementrieb (41, 42) mit dem Bewegungswandler (21) trieblich verbunden sind.
